# EUROPEAN PATENT APPLICATION

(11) **EP 4 632 830 A1**
(43) Date of publication of application: **15.10.2025**
(21) Application number: 25186692.7
(22) Date of filing: 01.07.2025
(51) Int. Cl.: H01M 4/04, H01M 4/139, H01M 10/0525

(54) **SECONDARY BATTERY, MANUFACTURING METHOD THEREOF, ENERGY STORAGE SYSTEM, AND ELECTRIC EQUIPMENT**

(30) Priority: 15.05.2025 CN 202510631668
(71) Applicant: Zhejiang Jinko Energy Storage Co., Ltd., Jiaxing, Zhejiang 314415 (CN)
(72) Inventor: LU, Mengting, Haining (CN); YANG, Zixiang, Haining (CN); ZHU, Mingwei, Haining (CN); ZHANG, Luhua, Haining (CN)
(74) Representative: Haseltine Lake Kempner LLP

(57) **Abstract**

The present disclosure provides a secondary battery, a manufacturing method thereof, an energy storage system, and an electric equipment. The method includes: providing a cell assembly including a cathode plate, a separator, and an anode plate; and providing a housing having an accommodation chamber, placing the cell assembly in the accommodation chamber, and injecting an electrolyte into the accommodation chamber. The method for forming the anode plate includes: providing an anode current collector (100); forming an anode active material layer (200) on a side surface of the anode current collector; forming a supporting layer (300) on a side surface of the anode active material layer away from the anode current collector, with a stacked structure (10) formed by the anode current collector, the anode active material layer, and the supporting layer; performing a roll-pressing treatment on the stacked structure; and removing the supporting layer to obtain the anode plate.

## Description

### TECHNICAL FIELD

The present disclosure relates to the field of secondary batteries, and in particular, to a secondary battery, a manufacturing method thereof, an energy storage system, and an electric equipment.

### BACKGROUND

Lithium-ion batteries are widely used in various electronic information products due to their advantages such as high specific energy density, high operating voltage, long storage life, and low discharge rate.

The performance of the lithium-ion batteries primarily depends on electrode plates, electrolytes, separators, and other battery materials contained therein, among which the electrode plates are of particular importance. During the processing of the electrode plates, the electrode plates need to be roll-pressed to enhance the adhesion of the active materials to the surfaces of the current collectors such as copper foils. Lighter and thinner copper foils in the electrode plates would result in reduced copper usage per unit of battery. On one hand, the reduction in copper usage lowers the production costs of the batteries. On the other hand, the thinning of the copper foils and the reduction in copper usages allow for the arrangement of more active materials within the available spaces inside the cells of the batteries, thereby increasing the cell capacity and the battery energy density without altering the volume of the cells.

Therefore, there is a need to provide a secondary battery with an ultra-thin copper foil.

### SUMMARY

The present disclosure provides a secondary battery, a manufacturing method thereof, an energy storage system, and an electric equipment, which is at least conductive to solving the problem of breakage of an ultra-thin copper foil during the roll-pressing treatment.

In a first aspect of the present disclosure, a method for manufacturing a secondary battery is provided, including:
providing a cell assembly including a cathode plate, a separator, and an anode plate, wherein steps of forming the anode plate include:
   providing an anode current collector with a thickness defined as a foil thickness *h*, where 0 µm < *h*≤5 µm;
   forming an anode active material layer on at least one side surface of the anode current collector;
   forming a supporting layer on a side surface of the anode active material layer facing away from the anode current collector, with a stacked structure formed by the anode current collector, the anode active material layer, and the supporting layer;
   performing a roll-pressing treatment on the stacked structure; and
   removing the supporting layer to obtain the anode plate; and
providing a housing with an accommodation chamber, placing the cell assembly in the accommodation chamber, and injecting an electrolyte into the accommodation chamber.

In some embodiments, before performing the roll-pressing treatment, a thickness of the supporting layer satisfies 2 µm≤*D*≤5 µm, where *D* denotes the thickness of the supporting layer.

In some embodiments, after performing the roll-pressing treatment on the stacked structure, a packing density of the anode active material layer satisfies 1.4 g/cm³ ≤ *ρ* ≤ 1.8 g/cm³, where *ρ* denotes the packing density of the anode active material layer.

In some embodiments, a material of the supporting layer includes at least one of a water-soluble material, a thermally decomposable material, or a photodegradable material.

In some embodiments, a method for forming the supporting layer includes:
providing a supporting slurry containing a dispersible material and a dispersant; and
coating the supporting slurry onto the side surface of the anode active material layer facing away from the anode current collector, performing a drying treatment, removing the dispersant, and curing the dispersible material to form the supporting layer.

In some embodiments, a mass percentage of the dispersible material in the supporting slurry is 3 wt% to 10 wt%.

In some embodiments, the supporting layer is made of the water-soluble material; and a method for removing the supporting layer includes:
performing a vapor dissolution treatment on the supporting layer to remove the supporting layer; and
cleaning the surface of the anode active material layer.

In some embodiments, the vapor dissolution treatment includes: performing a heating treatment under a water vapor atmosphere, with 85°C ≤ *T1* ≤ 110°C and 0.1 MPa ≤ *p1* ≤ 0.2 MPa, where *T1* denotes a temperature of the heating treatment, and *p1* denotes a pressure of the water vapor atmosphere.

In some embodiments, the material of the supporting layer includes at least one of a PVA material, a PEG material, a PVP material, a CMC material, a PVC material, an ethylene-carbon monoxide copolymer, or a vinyl ketone polymer material.

In some embodiments, in the step of performing the roll-pressing treatment, the supporting layer is further subjected to a heating treatment, a heating temperature of the heating treatment satisfies 40°C≤T2≤50°C, where *T2* denotes the heating temperature in the heating treatment.

In some embodiments, the roll-pressing treatment includes: performing multiple roll-pressings on the stacked structure, with a roll-pressing pressure of previous roll-pressing being less than or equal to that of subsequent roll-pressing.

In some embodiments, the roll-pressing treatment includes first roll-pressing and second roll-pressing that are performed sequentially, the first roll-pressing and the second roll-pressing satisfy 30 MPa≤*P1*≤50 MP and 60 MPa≤*P2*≤90 MPa, where *P1* denotes a roll-pressing pressure in the first roll-pressing, and *P2* denotes a roll-pressing pressure in the second roll-pressing.

In some embodiments, the tensile strength of the supporting layer is defined as a first tensile strength *σb1,* where 10 MPa ≤ *σb1* ≤ 120 MPa.

In some embodiments, the tensile strength of the stacked structure is defined as a second tensile strength *σb2,* where 40 MPa ≤ *σb2* ≤ 250 MPa.

In a second aspect of the present disclosure, a secondary battery is further provided. The secondary battery is obtained by the manufacturing method in the first aspect of the present disclosure.

The secondary battery includes:
a housing provided with an accommodation chamber therein; and
a cell assembly installed in the accommodation chamber, the cell assembly including a cathode plate, a separator, and an anode plate, and the anode plate including an anode current collector and an anode active material layer;
wherein a thickness of the anode current collector is defined as a foil thickness *h*, with 0 µm *< h* ≤ 5 *µm.*

In a third aspect of the present disclosure, an energy storage system is further provided. The energy storage system includes a plurality of secondary batteries. The secondary battery is obtained by the manufacturing method in the first aspect of the present disclosure or the second battery is the secondary battery in the second aspect of the present disclosure.

In a fourth aspect of the present disclosure, an electric equipment is further provided. The electric equipment includes a plurality of secondary batteries. The secondary battery is obtained by the manufacturing method in the first aspect of the present disclosure or the second battery is the secondary battery in the second aspect of the present disclosure.

The technical solutions provided in the embodiments of the present disclosure have at least the following advantages: in the embodiments of the present disclosure, by forming the supporting layer on the surface of the anode active material layer in the process of forming the anode plate, the overall mechanical strength is improved, and the supporting layer provides a supporting force during the subsequent roll-pressing treatment, thereby avoiding the problem of breakage of the anode current collector.

### BRIEF DESCRIPTION OF THE DRAWINGS

FIG. 1 is a flowchart depicting steps of a method for manufacturing a secondary battery according to an embodiment of the present disclosure;
FIG. 2 is a flowchart depicting steps of forming an anode plate in the method for manufacturing the secondary battery according to an embodiment of the present disclosure;
FIG. 3 is a schematic sectional structural view of providing an anode current collector in the method for manufacturing the secondary battery according to an embodiment of the present disclosure;
FIG. 4 is a schematic sectional structural view of forming an anode active material layer in the method for manufacturing the secondary battery according to an embodiment of the present disclosure;
FIG. 5 is a schematic sectional structural view of forming a supporting layer in the method for manufacturing the secondary battery according to an embodiment of the present disclosure;
FIG. 6 is a schematic view of a roll-pressing treatment in the method for manufacturing the secondary battery according to an embodiment of the present disclosure;
FIG. 7 is a schematic sectional structural view after a first roll-pressing treatment in the method for manufacturing the secondary battery according to an embodiment of the present disclosure;
FIG. 8 is a schematic sectional structural view after a second roll-pressing treatment in the method for manufacturing the secondary battery according to an embodiment of the present disclosure; and
FIG. 9 is a schematic sectional structural view of an anode plate formed in the method for manufacturing the secondary battery according to an embodiment of the present disclosure.

Description of reference numerals: 10-stacked structure; 100-anode current collector; 200-anode active material layer; 300-supporting layer; 1000-pressing roller.

### DETAILED DESCRIPTION

As can be seen from the background art, the increasing market demand for lithium batteries necessitates a reduction in battery production costs and an enhancement of battery capacities. Thinner and lighter copper foils in battery cells would result in reduced copper usage per unit of battery, which not only lowers the battery production costs but also improves the battery capacities. Consequently, the development trend of the copper foils in the battery cells is toward extreme thinness. During the processing of the electrode plates, the electrode plates need to be subjected to a roll-pressing treatment to enhance the adhesion of the active materials to the surfaces of the current collectors such as copper foils.

However, the tensile strength and elongation of ultra-thin copper foils often fail to meet the specifications required in the roll-pressing treatment. These ultra-thin copper foils are susceptible to breakage due to uneven tension and insufficient bonding force at the interface during the roll-pressing treatment. In related art, this issue is addressed by either enhancing the inherent mechanical properties of the copper foils or employing a composite copper foil structure (e.g., a PET copper foil, which consists of a PET film substrate coated with metallic copper on both sides). However, the former approach tends to be costly, while the latter involves a complex process.

The embodiments of the present disclosure provide a method for manufacturing a secondary battery, in which a supporting layer is further formed after forming an anode active material layer on an anode current collector during manufacturing an anode plate. The supporting layer, the anode active material layer, and the anode current collector collectively form a stacked structure that has a significantly increased overall structural strength as compared to the structural strength of an overall structure of an anode plate without the supporting layer. As such, the breakage of the anode current collector during the subsequent roll-pressing treatment can be avoided, and a greater roll-pressing pressure can be applied to the stacked structure, which effectively enhances the adhesion of the anode active material layer to the surface of the anode current collector, thereby reducing the contact resistance between the anode active material layer and the anode current collector while improving the energy density of the secondary battery. The supporting layer can be removed in subsequent steps and, therefore, does not affect the performance of the anode plate.

In the description of the embodiments of the present disclosure, the technical terms such as "first", "second", and the like are only used to distinguish different objects, and should not be understood as indicating or implying relative importance or implying the number, a specific order, or a primary and secondary relationship of indicated technical features. In the description of the embodiments of the present disclosure, "a plurality of" means two or more, unless otherwise expressly and specifically defined. Similarly, "a plurality of groups" means two or more groups (including two groups), and "a plurality of pieces " means two or more pieces (including two pieces).

Reference to "embodiment" herein means that specific features, structures, or characteristics described in conjunction with the embodiment may be included in at least one embodiment of the present disclosure. The appearance of the phrase in various places in the specification does not necessarily refer to the same embodiment, nor is it a separate or alternative embodiment that is mutually exclusive from other embodiments. Those skilled in the art explicitly or implicitly understand that the embodiments described herein may be combined with other embodiments.

In the description of the embodiments of the present disclosure, the term "and/or" is only an association relationship for describing associated objects, indicating that there may be three relationships, for example A and/or B may represent three situations: A exists alone, both A and B exist, and B exists alone. In addition, the character "/" herein generally indicates an "or" relationship between the preceding and succeeding associated objects.

In the description of the embodiments of the present disclosure, the directional or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are directional or positional relationships based on the accompanying drawings, and are only for the convenience of describing the embodiments of the present disclosure and simplifying the description, rather than indicating or implying that the referred apparatus or element should have a specific orientation or should be configured and operated in the specific orientation, and therefore are not to be understood as limitations on the embodiments of the present disclosure. For example, if a device or an element shown in the figures is inverted, an element described as being "below", "underneath", "beneath", or "at the bottom" of another element or feature will be oriented "above" or "on the top" of the another element or feature. Therefore, the term "below" may encompass an upper orientation and a lower orientation depending on the context in which the term is used, which will be apparent to those of ordinary skill in the art. A material may be oriented in other ways (e.g., rotated by 90 degrees, inverted, and flipped), and spatial relative descriptors used herein may be interpreted accordingly.

In the description of the embodiments of the present disclosure, unless otherwise expressly specified and limited, the technical terms "mount", "attach", "connect" ,"fix", etc. should be understood in a broad sense, such as, a fixed connection, a detachable connection, or an integral connection; a mechanical connection, or an electrical connection; or a direct connection, an indirect connection through an intermediate medium, an internal communication of two elements, or interaction between two elements. Those of ordinary skill in the art should understand the specific meanings of the above terms in the embodiments of the present disclosure according to specific situations.

In the accompanying drawings corresponding to the embodiments of the present disclosure, thicknesses and areas of layers are enlarged for a better understanding and ease of description. Additionally, when a component is described as being formed "substantially" on another component, it means that the component may not be formed on an entire surface (or a front surface) of the other component, nor is it formed on a portion of an edge of the entire surface.

In the description of the embodiments of the present disclosure, when a component "includes" another component, unless otherwise specified, the presence of other components is not excluded, and other components may further be included. The formation or arrangement of a second component above or on a first component, or the formation or arrangement of the second component on a surface of the first component, or the formation or arrangement of the second component on one side of the first component may include an embodiment about a direct contact between the first component and the second component, or may also include an embodiment in which an additional component may exist between the first component and the second component, such that the first component and the second component may not be in direct contact. For simplicity and clarity, various components may be drawn at arbitrary scales. In the accompanying drawings, some layers/components may be omitted for simplification. Unless otherwise specified, the formation or arrangement of the second component on the surface of the first component refers to the direct contact between the first component and the second component. The above "component" may refer to a layer, a film, a region, a portion, a structure, etc.

The terms used in the description of various embodiments herein are only for the purpose of describing specific embodiments and are not intended for limitations. As used in the description of various described embodiments and the appended claims, "the component" is also intended to include the plural form, unless the context clearly indicates otherwise. The component includes parts such as layers, films, regions, or plates.

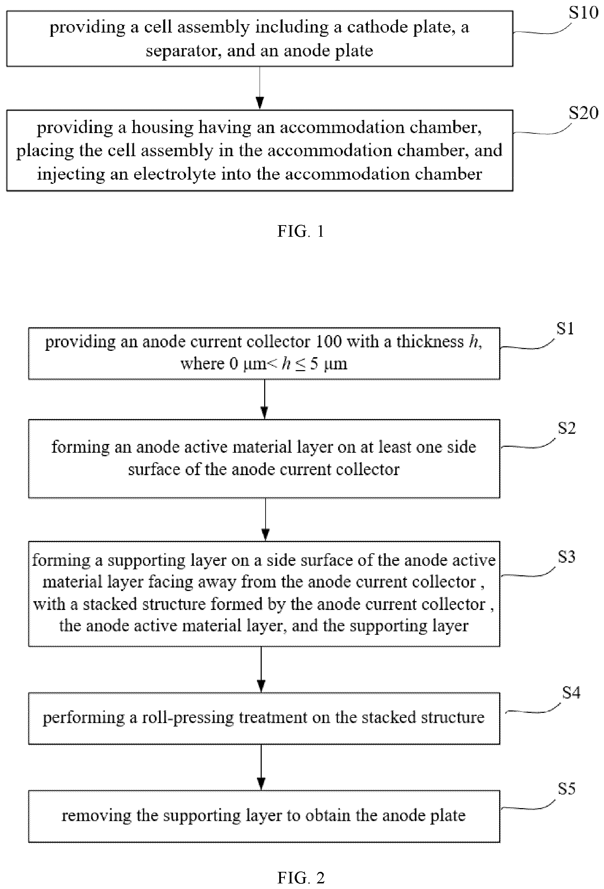

FIG. 1 and FIG. 2 illustrates flowcharts depicting steps of a method for manufacturing a secondary battery according to embodiments of the present disclosure.

Referring to FIG. 1 and FIG. 2, the method for manufacturing the secondary battery includes:
S10: providing a cell assembly including a cathode plate, a separator, and an anode plate; and
S20: providing a housing having an accommodation chamber, placing the cell assembly in the accommodation chamber, and injecting an electrolyte into the accommodation chamber.

The steps for forming the anode plate include:
S1: providing an anode current collector 100 with a thickness *h,* where 0 µm *< h* ≤ 5 µm;
S2: forming an anode active material layer 200 on at least one side surface of the anode current collector 100;
S3: forming a supporting layer 300 on a side surface of the anode active material layer 200 facing away from the anode current collector 100, with a stacked structure 10 formed by the anode current collector 100, the anode active material layer 200, and the supporting layer 300;
S4: performing a roll-pressing treatment on the stacked structure 10; and
S5: removing the supporting layer 300 to obtain the anode plate.

The embodiments of the present disclosure will be described in more detail below with reference to FIG. 1 to FIG. 8.

Referring to FIG. 1, FIG. 1 illustrates a flowchart depicting steps of a method for manufacturing a secondary battery according to an embodiment of the present disclosure, including a step S10 and a step S20.

In the step S10, a cell assembly is provided. The cell assembly includes a cathode plate, a separator, and an anode plate. The separator separates the cathode plate from the anode plate. The cell assembly may be of a wound structure, where the cathode plate, the separator, and the anode plate are sequentially stacked and wound two or more turns to form the cell assembly. Alternatively, the cell assembly may be of a stacked structure, where a plurality of cathode plates and a plurality of anode plates are provided and alternately stacked, with each of the plurality of cathode plates separated from the adjacent one of the plurality of anode plates by a respective separator.

The anode plate is an electrode plate containing an active material that undergo an oxidation reaction during discharge and having a low potential.

In the step S20, a housing with an accommodation chamber is provided. The cell assembly is placed in the accommodation chamber. An electrolyte is injected into the accommodation chamber. Finally, the secondary battery is obtained.

The housing may be cylindrical, cubic, or may be in any other shape.

The secondary battery may be a lithium-ion battery, a sodium-ion battery, or any other type of battery whose active material can be reactivated by charging after discharge for continued use.

Referring to FIG. 2, FIG. 2 illustrates a flowchart depicting steps for forming the anode plate in the method for manufacturing the secondary battery according to an embodiment of the present disclosure. The method for forming the anode plate includes steps S1 to S5.

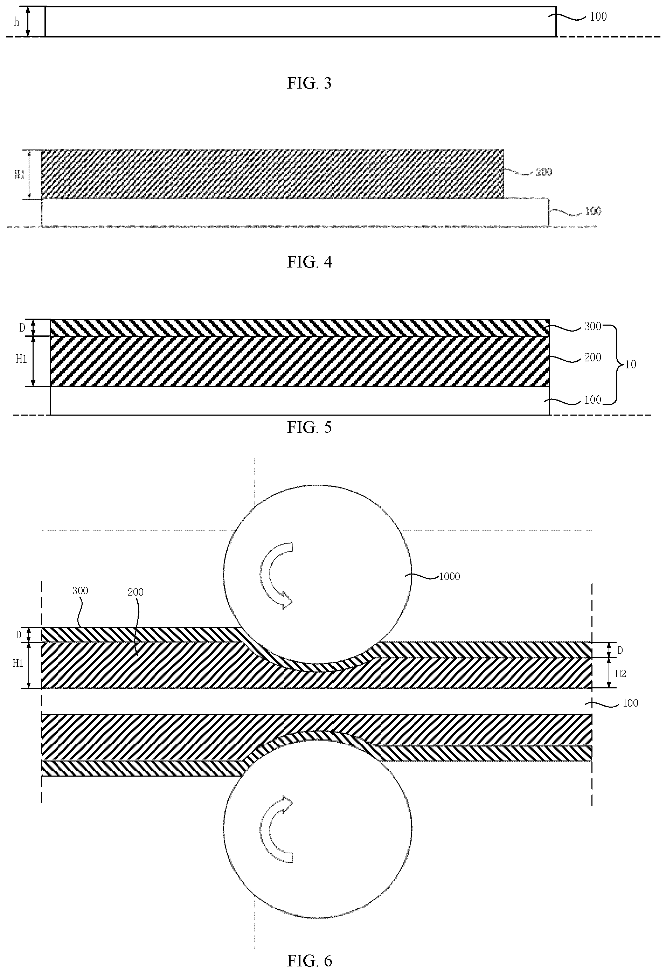

As shown in FIG. 3, in the step S1, an anode current collector 100 is provided. The anode current collector 100 is of a sheet structure extending in a length direction thereof.

A material of the anode current collector 100 is any one of a copper foil, a nickel foil, or a cobalt foil. These materials are characterized by a good electrical conductivity and a unique porous surface structure, which allow for better integration with the active material and provides more contact points and diffusion channels that enhance electron conduction and ion diffusion, thereby improving the charge-discharge performance and cycle stability of the secondary battery. The porous structure may also provide a larger surface area and more abundant active reaction sites, facilitating the uniform distribution of the active material and more effective electrochemical reaction.

In some embodiments, a thickness of the anode current collector 100 is defined as a foil thickness *h,* satisfying 0 µm *< h* ≤ 5 µm. Optionally, 3 µm ≤ *h* ≤ 5 µm. The foil thickness *h* of the anode current collector 100 may be 3 µm, 3.5 µm, 4 µm, or 4.5 µm. Compared to the related art, the anode current collector 100 in the secondary battery in the embodiment of the present disclosure is thinner, resulting in reduced copper usage in the secondary battery while achieving increased energy density of the secondary battery in the embodiment of the present disclosure.

In the step S2, as shown in FIG. 4, an anode active material layer 200 is formed on at least one side surface of the anode current collector 100.

A material of the anode active material layer 200 includes at least one of a carbon-based compound, a silicon-based compound, or a titanium-based compound. During discharge, the anode active material in the anode active material layer 200 releases stored ions and electrons, which are transmitted to the cathode through an external circuit, generating a current output. During charge, the anode active material in the anode active material layer 200 absorbs ions migrating from the cathode through an intercalation reaction.

It should be noted that in some embodiments, two opposite side surfaces of the anode current collector 100 are each provided with the anode active material layer 200; and in some other embodiments, on only one side surface of the anode current collector 100 is provided with the anode active material layer 200, which is not specifically limited herein.

In the step S3, as shown in FIG. 5, a supporting layer 300 is formed on a side surface of the anode active material layer 200 facing away from the anode current collector 100. The anode current collector 100, the anode active material layer 200, and the supporting layer 300 collectively form a stacked structure 10. The supporting layer 300 is configured to provide a mechanical support, such that the stacked structure 10 has a significantly improved tensile strength than that of the transition structure formed by the anode current collector 100 and the anode active material layer 200 in the step S2, thereby avoiding the breakage of the anode current collector 100 in the stacked structure 10 due to uneven tension or insufficient bonding force at interface during the roll-pressing treatment performed on the stacked structure 10 in the subsequent step S4. Moreover, the provision of the supporting layer 300 before the roll-pressing treatment allows the anode current collector 100 to be designed with a thinner thickness, which reduces the amount of copper used in the secondary battery and improvs the energy density of the secondary battery.

In some embodiments, a tensile strength of the supporting layer 300 is defined as a first tensile strength *σb1,* where 10 MPa ≤ *σb1* ≤ 120 MPa. Optionally, 20 MPa ≤ *σb1* ≤ 100 MPa. The first tensile strength *σb1* of the supporting layer 300 may be 50 MPa, 70 MPa, or 100 MPa.

In some embodiments, a tensile strength of the stacked structure 10 is defined as a second tensile strength *σb2,* where 40 MPa ≤ *σb2* ≤ 250 MPa. Optionally, 50 MPa ≤ *σb2* ≤ 250 MPa. The second tensile strength *σb2* of the stacked structure 10 may be 100 MPa, 150 MPa, or 200 MPa.

In some embodiments, a thickness of the supporting layer 300 is defined as a supporting layer thickness *D,* satisfying 2 µm *< D* ≤ 15 µm. Optionally, 8 µm ≤ *D* ≤ 15 µm. The supporting layer thickness *D* of the supporting layer 300 may be 8 µm, 10 µm, 12 µm, or 15 µm.

In some embodiments, a material of the supporting layer 300 includes at least one of a water-soluble material, a thermally decomposable material, or a photodegradable material. The supporting layer 300 made of the above materials is easily removed in the removing process of the supporting layer 300 in the subsequent step S5, thereby avoiding damage to the structure or chemical performance of the anode plate during the formation or removal of the supporting layer 300.

In some embodiments, when the supporting layer 300 is made of the water-soluble material, the material of the supporting layer 300 may include any one of a polyvinyl alcohol (PVA) material, a polyethylene glycol (PEG) material, a polyvinylpyrrolidone (PVP) material, or a carboxymethylcellulose (CMC) material.

In some embodiments, when the supporting layer 300 is made of the thermally decomposable material, the material of the supporting layer 300 includes a polyvinyl chloride (PVC) material.

In some embodiments, when the supporting layer 300 is made of the photodegradable material, the material of the supporting layer 300 may include at least one of an ethylene-carbon monoxide copolymer material or a vinyl ketone polymer material.

In some embodiments, a method for forming the anode active material layer 200 includes a wet forming process or a dry forming process.

In some embodiments, the anode active material layer 200 is formed by a wet forming process. The wet forming process involves coating an anode slurry containing the anode active material on the at least one side surface of the anode current collector 100, and then drying the anode slurry to obtain the cured anode active material layer 200. In some other embodiment, the anode active material layer 200 is formed by a dry forming process. The dry forming process involves forming the anode active material with a binder into an anode active material film that has an adhesive property, and binding the anode active material film to the at least one side surface of the anode current collector 100 to form the anode active material layer 200. Alternatively, the dry forming process involves mixing the anode active material with the binder, and spraying the mixture onto the at least one side surface of the anode current collector 100 to directly form the cured anode active material layer 200.

A method for forming the supporting layer 300 includes:
step S31: providing a supporting slurry containing a dispersible material and a dispersant, with the dispersible material uniformly dispersed in the liquid dispersant. The supporting slurry may be any one of a solution, a suspension, or an emulsion; and
step S32: coating the supporting slurry onto a side surface of the anode active material layer 200 facing away from the anode current collector 100, followed by a drying treatment in which the dispersant volatilizes due to heat absorption and is thus removed, with the remaining dispersible material cured to form the supporting layer 300.

In some embodiments, a mass percentage of the dispersible material in the supporting slurry is 3 wt% to 10 wt%. Optionally, the mass percentage of the dispersible material in the supporting slurry is 5 wt% to 8 wt%. The mass percentage of the dispersible material in the supporting slurry may be 6 wt%, 7 wt%, or 8 wt%. The supporting slurry, containing the appropriate mass percentage of the dispersible material, exhibits good adhesion and film-forming properties, allowing for easy coating on the surface of the anode active material layer 200, while enabling the dried supporting layer 300 to have a supporting layer thickness within a reasonable range.

In the step S4, as shown in FIG. 6, a roll-pressing treatment is performed on the stacked structure 10. The stacked structure 10 is fed between two opposite rotating pressing rollers 1000 and roll-pressed to reduce the thickness of the anode active material layer 200. The roll-pressing treatment, on one hand, can make the surface of the anode active material layer 200 facing away from the anode current collector 100 smoother and flatter, thereby preventing burrs on the surface of the anode active material layer 200 from puncturing the separator and causing a short circuit. The roll-pressing treatment can also reduce the thickness of the anode active material layer 200 and the thickness of the electrode plate, thereby improving the energy density of the secondary battery. The roll-pressing treatment, on the other hand, can also increase the packing density of the anode active material layer 200, thereby making the contact of particles of the anode active material in the anode active material layer 200 closer, and improving the electron conductivity. The roll-pressing treatment can also cause the anode active material layer 200 to be better attached to the surface of the anode current collector 100, thereby reducing the contact resistance between the anode active material layer 200 and the anode current collector 100, and improving the performance of the secondary battery.

In some embodiments, after the roll-pressing treatment is performed on the stacked structure 10, the packing density of the anode active material layer 200 is defined as a packing density *ρ,* satisfying 1.4 g/cm³ ≤ *ρ* ≤ 1.8 g/cm³. Optionally, 1.5 g/cm³ ≤ *ρ* ≤ 1.7 g/cm³. The packing density *ρ* of the anode active material layer 200 may be 1.5 g/cm³, 1.6 g/cm³, or 1.7 g/cm³.

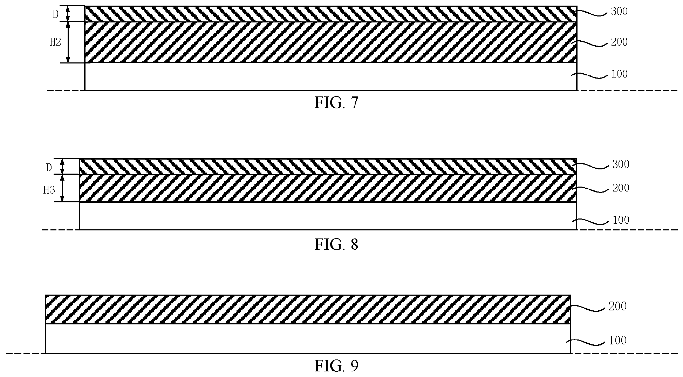

A process of performing the roll-pressing treatment on the stacked structure 10 includes a double roll-pressing process, involving a first roll-pressing and a second roll-pressing sequentially performed on the stacked structure 10. The stacked structure 10 after the first roll-pressing is shown in FIG. 7, and the stacked structure 10 after the second roll-pressing is shown in FIG. 8. In the double roll-pressing process, the anode active material layer 200 is firstly roll-pressed to a certain thickness through the first roll-pressing, and then roll-pressed to a designed thickness and density through the second roll-pressing. The double roll-pressing process not only can minimize the cracking of particles of the active material in the active material layer, but also can ensure a uniform pore distribution within the active material layer, thereby facilitating electrolyte infiltration, reducing the internal resistance of the anode plate, and enhancing the performance of the secondary battery.

In some embodiments, a roll-pressing pressure in the first roll-pressing is defined as a first roll-pressing pressure *P1,* and a roll-pressing pressure in the second roll-pressing is defined as a second roll-pressing pressure P2, satisfying *P1 < P2.* Setting the roll-pressing pressure in the second roll-pressing greater than that in the first roll-pressing avoids the instantaneous deformation of the anode current collector 100 in the anode plate under high pressure, which can lead to tearing due to stress concentration, a phenomenon that occurs in the related art where only a single roll-pressing process is applied to the anode plate.

In the double roll-pressing process in the embodiments of the present disclosure, the first roll-pressing is firstly performed, resulting in an increased compaction density and a reduced thickness of the anode active material layer 200 in the stacked structure 10, which improve the mechanical strength of the anode active material layer 200 in the stacked structure 10 and thus improve the overall mechanical strength of the stacked structure 10. The reduction in thickness of the anode active material layer 200 during the first roll-pressing leads to a decreased variation in thickness of the anode active material layer 200 during the second roll-pressing, which in turn reduces the deformation of the anode current collector 100 during the second roll-pressing, consequently decreasing the occurrence probability of tearing of the anode current collector 100 during the roll-pressing process and ultimately improving the yield of the secondary battery

In some embodiments, the first roll-pressing pressure *P1* in the first roll-pressing satisfies 30 MPa ≤ *P1* ≤ 50 MPa. Optionally, 35 MPa ≤ *P1* ≤ 45 MPa. The first roll-pressing pressure *P1* in the first roll-pressing may be 35 MPa, 40 MPa, or 45 MPa.

In some embodiments, the second roll-pressing pressure *P2* in the second roll-pressing satisfies 60 MPa ≤ *P2* ≤ 90 MPa. Optionally, 70 MPa ≤ *P2* ≤ 80 MPa. The second roll-pressing pressure *P2* in the second roll-pressing may be 70 MPa, 75 MPa, or 80 MPa.

It should be noted that in this embodiment, a process of the roll-pressing treatment is the double roll-pressing process; and in some other embodiments, the number of roll-pressing in the roll-pressing treatment may be greater than two, with the roll-pressing pressure gradually increasing, meaning that the roll-pressing pressure in a subsequent roll-pressing is greater than that in a previous roll-pressing. No specific imitations are imposed herein.

In some embodiments, a thickness of the anode active material layer 200 before the roll-pressing treatment is defined as a first thickness *H1,* a thickness of the anode active material layer 200 after the first roll-pressing is defined as a second thickness *H2*, and a thickness of the anode active material layer 200 after the second roll-pressing is defined as a third thickness *H3*, satisfying 0.5×*H1* ≤ *H2* ≤ 0.95×*H1* and 0.6×*H1* ≤ *H3* ≤ 0.9×*H1.* Optionally, 0.7×*H1* ≤ *H2* ≤ 0.9×*H1* or 0.75×*H1* ≤ H3 ≤ 0.8×*H1.*

In some embodiments, the first thickness *H1* of the anode active material layer 200 before the roll-pressing treatment satisfies 165 µm ≤ *H1* ≤ 200 µm. Optionally, 175 µm ≤ *H1* ≤ 195 µm. The first thickness *H1* of the anode active material layer 200 before the roll-pressing treatment may be 175 µm, 180 µm, 185 µm, or 190 µm.

In some embodiments, the second thickness *H2* of the anode active material layer 200 after the first roll-pressing satisfies 130 µm ≤ *H2* ≤ 170 µm. Optionally, 140 µm ≤ *H2* ≤ 160 µm. The second thickness *H2* of the anode active material layer 200 after the first roll-pressing may be 140 µm, 145 µm, 150 µm, or 155 µm.

In some embodiments, the third thickness *H3* of the anode active material layer 200 after the second roll-pressing satisfies 125 µm ≤ *H3* ≤ 150 µm. Optionally, 130 µm ≤ *H3* ≤ 140 µm. The third thickness *H3* of the anode active material layer 200 after the second roll-pressing may be 130 µm, 135 µm, 138 µm, or 140 µm.

To better describe the beneficial effects provided by the embodiments of the present disclosure, corresponding examples and comparative examples are provided below for illustration. Please refer to the following table for details:

**Table 1**

| Serial No. | Supporting layer material | *D* (µm) | *H1* (µm) | Roll-pressing process | *P1* (MPa) | *H2* (µm) | *P2* (MPa) | *H3* (µm) | Breakage rate (%) |
|---|---|---|---|---|---|---|---|---|---|
| Example 1 | PVA | 3 | 180 | Double roll-pressing | 40 | 140 | 75 | 133 | 0.5 |
| Example 2 | PVA | 6 | 180 | Double roll-pressing | 40 | 145 | 75 | 135 | 0.4 |
| Example 3 | PVA | 9 | 180 | Double roll-pressing | 40 | 150 | 75 | 138 | 0.38 |
| Example 4 | PVA | 12 | 180 | Double roll-pressing | 40 | 155 | 75 | 140 | 0.35 |
| Example 5 | PVA | 6 | 180 | Double roll-pressing | 50 | 142 | 90 | 132 | 0.43 |
| Example 6 | PVA | 6 | 180 | Double roll-pressing | 30 | 147 | 60 | 137 | 0.39 |
| Example 7 | PEG | 6 | 180 | Double roll-pressing | 40 | 146 | 75 | 136 | 0.41 |
| Example 8 | PVP | 6 | 180 | Double roll-pressing | 40 | 143 | 75 | 134 | 0.39 |
| Example 9 | PVC | 6 | 180 | Double roll-pressing | 40 | 147 | 75 | 138 | 0.42 |
| Example 10 | Ethylene-carbon monoxide copolymer | 6 | 180 | Double roll-pressing | 40 | 150 | 75 | 138 | 0.45 |
| Example 11 | Vinyl ketone polymer | 6 | 180 | Double roll-pressing | 40 | 152 | 75 | 140 | 0.51 |
| Comparativ e Example 1 | No supporting layer | / | 180 | Double roll-pressing | 40 | 140 | 75 | 130 | 5 |
| Comparativ e Example 2 | No supporting layer | / | 180 | Single roll-pressing | 90 | 138 | / | / | 8 |
| Comparativ e Example 3 | PVA | 1 | 180 | Double roll-pressing | 40 | 143 | 75 | 133 | 2.8 |
| Comparativ e Example 4 | PVA | 15 | 180 | Double roll-pressing | 40 | 170 | 75 | 160 | 0.34 |
| Comparativ e Example 5 | PVA | 6 | 180 | Single roll-pressing | 90 | 140 | / | / | 3 |
| Comparativ e Example 6 | PVA | 6 | 180 | Single roll-pressing | 75 | 145 | / | / | 1 |
| Comparativ e Example 7 | PVA | 6 | 180 | Double roll-pressing | 60 | 140 | 60 | 137 | 1.2 |
| Comparativ e Example 8 | PVA | 6 | 180 | Double roll-pressing | 75 | 138 | 40 | 135 | 1.5 |

From the data of Examples 1 to 8, Comparative Example 1, and Comparative Example 2 in the above table, it can be seen that the breakage rate during the roll-pressing treatment performed on the stacked structure 10 provided with the supporting layer 300 is significantly lower than the breakage rate during the roll-pressing treatment directly performed on the electrode plate without the supporting layer 300, suggesting that the supporting layer 300 provides a mechanical support during the roll-pressing treatment, which improves a resistance to tension of the stacked structure 10, thereby reducing the breakage rate of the anode current collector 100 during the roll-pressing treatment.

From the data of Examples 1 to 4, Comparative Example 3, and Comparative Example 4 in the above table, it can be seen that when the material of the supporting layer 300 and the process and parameters of the roll-pressing treatment are the same, the thicker the supporting layer 300 is, the lower the breakage rate of the anode current collector 100 during the roll-pressing treatment. However, when the thickness of the anode current collector 100 is less than 3 µm, the breakage rate of the anode current collector 100 is still too high, suggesting that the supporting layer 300 has difficulty providing effective protection during the roll-pressing treatment in this case. When the thickness of the supporting layer 300 is greater than 12 µm, although the breakage rate of the anode current collector 100 decreases, the amplitude of the decrease is small, and an excessively thick supporting layer 300 will lead to high process costs for the subsequent removal of the supporting layer 300.

From the data of Example 2, Example 5, Example 6, Comparative Example 5, and Comparative Example 6 in the above table, it can be seen that when both the material and the thickness of the supporting layer 300 are the same, the breakage rate in Examples where the double roll-pressing process is adopted in the roll-pressing treatment is lower than that in Comparative Examples where the single roll-pressing process is adopted in the roll-pressing treatment, suggesting that the double roll-pressing process adopted in the embodiments of the present disclosure reduces the probability of breakage of the anode current collector 100 during the roll-pressing treatment and improves the yield of the secondary battery.

From the data of Example 2, Example 5, Example 6, Comparative Example 7, and Comparative Example 8 in the above table, it can be seen that in the Examples adopting the double roll-pressing process, when both the material and the thickness of the supporting layer 300 are the same, the breakage rate in the Example where the roll-pressing pressure in the second roll-pressing is greater than that in the first roll-pressing is lower than the breakage rate in the Example where the roll-pressing pressures in the two times of roll-pressing are equal or where the roll-pressing pressure of the first roll-pressing is greater than that of the second roll-pressing. This suggests that the technical solutions in the embodiments of the present disclosure that have the roll-pressing pressure in a subsequent roll-pressing greater than that in a previous roll-pressing can further reduce the probability of breakage of the anode current collector 100 during the roll-pressing treatment and improve the yield of the secondary battery.

In some embodiments, in the step of performing the roll-pressing treatment on the stacked structure 10, the supporting layer 300 is further subjected to a heating treatment. By heating the supporting layer 300 to a certain temperature, the tensile strength of the supporting layer 300 is improved, so that the tensile strength of the stacked structure 10 is increased, and then the problem of tearing of the anode current collector 100 during the roll-pressing treatment is further avoided.

In some embodiments, a method of the heating treatment includes heating a pressing roller 1000 used in the roll-pressing treatment, so that a heat transfer occurs between the pressing roller 1000 and the supporting layer 300 in the stacked structure 10 with which the pressing roller 1000 make contact, which increases the temperature of the supporting layer 300 and then improves the tensile strength of the supporting layer 300. In some embodiments, a heating resistance wire is provided within the pressing roller 1000, and the heating resistance wire is energized to heat the pressing roller 1000.

In some embodiments, a heating temperature T2 in the heating treatment satisfies 40°C ≤ *T2* ≤ 50°C. Optionally, 42°C ≤ *T2* ≤ 48°C. The heating temperature *T2* in the heating treatment may be 42°C, 44°C, 46°C, or 48°C.

It should be noted that, due to the high tensile strength of the supporting layer 300, the thickness of the supporting layer 300 changes very little after the roll-pressing treatment, thereby facilitating the anode active material layer 200 to achieve the target thickness.

It should also be noted that in some embodiments, as shown in FIG. 6, the thicknesses of the anode active material layers 200 on both side surfaces of the anode current collector 100 are equal, the thicknesses of the supporting layers 300 on the both sides of the anode current collector 100 are also equal, and during the roll-pressing treatment on the stacked structure 10, the roll-pressing pressures on the anode active material layers 200 on the both sides of the anode current collector 100 are consistent, so that the thicknesses of the anode active material layers on the both sides after the roll-pressing are also consistent, preventing the anode current collector 100 from experiencing sudden deformation during the roll-pressing process.

In some other embodiments, the thicknesses of the anode active material layers 200 on the both side surfaces of the anode current collector 100 are not equal, and the thicknesses of the supporting layers 300 on the both sides of the anode current collector 100 are also not equal. The anode active material layer 200 and the supporting layer 300 on either of the side surfaces of the anode current collector 100 form a combined structure. The thickness of the anode active material layer 200 in the combined structure on one of the side surfaces of the anode current collector 100 is greater than the thickness of the anode active material layer 200 in the combined structure on the other of the side surfaces of the anode current collector 100, while the thickness of the supporting layer 300 in the combined structure with the thicker anode active material layer 200 is greater than the thickness of the supporting layer 300 in the combined structure with the thinner anode active material layer 200. That is, the anode active material layer 200 with a greater thickness is matched with the supporting layer 300 with a smaller thickness, while the anode active material layer 200 with a smaller thickness is matched with the supporting layer 300 with a greater thickness. This ensures that the tensile strengths of the combined structures on the both side surfaces of the anode current collector 100 are consistent, avoiding the problem about sudden deformation or even breakage of the anode current collector 100 in the roll-pressing process due to the inconsistent tensile strengths of the combined structures on the both sides of the anode current collector 100, and further improving the yield of the secondary battery.

In the step S5, as shown in FIG. 9, the supporting layer 300 is removed to obtain an anode plate including the anode current collector 100 and the anode active material layer 200. The removal of the supporting layer 300 does not affect the physical and chemical properties of the anode plate and the cell assembly formed during subsequent assembly process.

When the supporting layer 300 is made of a water-soluble material, the method for removing the supporting layer 300 includes:
Step S51: performing a vapor dissolution treatment on the supporting layer 300 to remove the supporting layer 300. The supporting layer 300 is subjected to a heating treatment in a water vapor atmosphere, so that the supporting layer 300 made of the water-soluble material dissolves into the water vapor, thereby achieving an initial removal of the supporting layer 300. By placing the supporting layer 300 in the high-temperature water vapor atmosphere, a dissolution rate thereof can be accelerated, thereby reducing the residual amount of the supporting layer 300 on the surface of the anode active material layer 200 after the vapor dissolution treatment. By placing the supporting layer 300 in a low-pressure water vapor atmosphere, damage to the anode active material layer 200 caused by high-pressure steam flow is avoided, thereby improving the yield of the secondary battery.
Step S52: performing a cleaning treatment on the surface of the anode active material layer 200. A low-pressure cleaning is performed on the surface of the anode active material layer 200 using an aqueous solution, so that the residual supporting layer 300 is dissolved into the aqueous solution, thereby removing the residual supporting layer 300 on the surface of the anode active material layer 200. By performing the low-pressure cleaning treatment on the anode active material layer 200, damage to the anode active material layer 200 caused by high-pressure water flow is avoided, thereby improving the yield of the secondary battery.

In some embodiments, process parameters for the vapor dissolution treatment include a process temperature *T1* of the water vapor atmosphere, satisfying 85°C≤*T1*≤110°C. Preferably, 90°C ≤ *T1* ≤ 105°C. The process temperature *T1* of the water vapor atmosphere may be 90°C, 95°C, 100°C, or 105°C.

In some embodiments, the process parameters for the vapor dissolution treatment further include a vapor pressure *p1* of the water vapor atmosphere, satisfying 0.1 MPa≤*p1*≤ 0.2 MPa. Optionally, 0.12 MPa *≤ p1* ≤ 0.18 MPa. The vapor pressure *p1* of the water vapor atmosphere may be 0.12 MPa, 0.14 MPa, 0.16 MPa, or 0.18 MPa.

In some embodiments, a water flow pressure *p2* for the low-pressure cleaning on the anode active material layer 200 satisfies 0.1 MPa ≤ *p2* ≤ 0.5 MPa. Optionally, 0.3 MPa ≤ *p2* ≤ 0.4 MPa. The water flow pressure *p2* of the water vapor atmosphere may be 0.3 MPa, 0.34 MPa, 0.38 MPa, or 0.4 MPa. By performing the low-pressure cleaning treatment on the anode active material layer 200, damage to the anode active material layer 200 caused by the high-pressure water flow is avoided, thereby improving the yield of the secondary battery.

When the supporting layer 300 is made of a thermally decomposable material, the method for removing the supporting layer 300 includes:
Step S53: performing a heating treatment on the supporting layer 300 to cause the thermal decomposition of the supporting layer 300. The supporting layer 300 is thermally decomposed into gas and a small amount of residual small molecular particles.
Step S54: removing the residual small molecular particles from the surface of the anode active material layer. Specifically, a blow-off process is used to blow away the residual small molecular particles from the surface of the anode active material layer. That is, a high-pressure gas flow is used to blow away the small molecular particles to keep the surface of the anode active material layer clean, so that the physical and chemical properties of the anode plate will not be affected. In some other embodiments, a low-pressure cleaning process is used to remove the residual small molecular particles from the surface of the anode active material layer.

When the supporting layer 300 is made of a photodegradable material, the method for removing the supporting layer 300 includes:
Step S55: performing a light illumination treatment on the supporting layer 300 to cause a photodecomposition of the supporting layer 300. Under the light illumination, the supporting layer 300 is decomposed into gas and a small amount of residual small molecular particles.
Step S56: removing the residual small molecular particles from the surface of the anode active material layer. Specifically, a blow-off process is used to blow away the residual small molecular particles from the surface of the anode active material layer. That is, a high-pressure gas flow is used to blow away the small molecular particles to keep the surface of the anode active material layer clean, so that the physical and chemical properties of the anode plate will not be affected. In some other embodiments, a low-pressure cleaning process is used to remove the residual small molecular particles from the surface of the anode active material layer

Accordingly, another embodiment of the present disclosure further provides a secondary battery, which may be obtained through the above method for manufacturing the secondary battery. The secondary battery includes:
a housing provided with an accommodation chamber therein; and
a cell assembly installed in the accommodation chamber, the cell assembly including a cathode plate, a separator, and an anode plate, and the anode plate including an anode current collector 100 and an anode active material layer 200.

A thickness of the anode current collector 100 is defined as a foil thickness h, where 0 µm *< h* ≤ 5 µm.

Accordingly, another embodiment of the present disclosure further provides an energy storage system, which includes a plurality of secondary batteries. The secondary battery may be obtained through the above method for manufacturing the secondary battery or may be the above secondary battery.

Accordingly, another embodiment of the present disclosure further provides an electric equipment, which includes a plurality of secondary batteries. The secondary battery may be obtained through the above method for manufacturing the secondary battery or may be the above secondary battery.

## Claims

1. A method for manufacturing a secondary battery, comprising:
providing a cell assembly comprising a cathode plate, a separator, and an anode plate, wherein a method for forming the anode plate comprises:
providing an anode current collector (100), a thickness of the anode current collector being defined as a foil thickness *h,* where 0 µm < *h*≤5 µm;
forming an anode active material layer (200) on at least one side surface of the anode current collector;
forming a supporting layer (300) on a side surface of the anode active material layer facing away from the anode current collector, with a stacked structure (10) formed by the anode current collector, the anode active material layer, and the supporting layer;
performing a roll-pressing treatment on the stacked structure; and
removing the supporting layer to obtain the anode plate; and
providing a housing with an accommodation chamber, placing the cell assembly in the accommodation chamber, and injecting an electrolyte into the accommodation chamber.

2. The method for manufacturing the secondary battery according to claim 1, wherein before performing the roll-pressing treatment, a thickness *D* of the supporting layer satisfies 2 µm≤*D*≤15 µm.

3. The method for manufacturing the secondary battery according to claim 1 or 2, wherein after performing the roll-pressing treatment on the stacked structure, a packing density *ρ* of the anode active material layer satisfies 1.4 g/cm³ ≤ *ρ* ≤ 1.8 g/cm³.

4. The method for manufacturing the secondary battery according to any one of claims 1 to 3, wherein a material of the supporting layer comprises a water-soluble material, a thermally decomposable material, a photodegradable material, or any combination thereof;
optionally, the material of the supporting layer comprises a PVA material, a PEG material, a PVP material, a CMC material, a PVC material, an ethylene-carbon monoxide copolymer, a vinyl ketone polymer material, or any combination thereof.

5. The method for manufacturing the secondary battery according to any one of claims 1 to 4, wherein a method for forming the supporting layer comprises:
providing a supporting slurry containing a dispersible material and a dispersant; and
coating the supporting slurry onto the side surface of the anode active material layer facing away from the anode current collector, drying the supporting slurry, removing the dispersant, and curing the dispersible material to form the supporting layer;
optionally, a mass percentage of the dispersible material in the supporting slurry is 3 wt% to 10 wt%.

6. The method for manufacturing the secondary battery according to claim 4, wherein the supporting layer is made of the water-soluble material, and a method for removing the supporting layer comprises:
performing a vapor dissolution treatment on the supporting layer to remove the supporting layer; and
performing a cleaning treatment on a surface of the anode active material layer.

7. The method for manufacturing the secondary battery according to claim 6, wherein the vapor dissolution treatment comprises: performing a heating treatment under a water vapor atmosphere, with 85°C ≤ *T1* ≤ 110°C and 0.1 MPa ≤ *p1* ≤ 0.2 MPa, where *T1* denotes a temperature of the heating treatment and *p1* denotes a vapor pressure of the water vapor atmosphere.

8. The method for manufacturing the secondary battery according to any one of claims 1 to 7, wherein in the performing the roll-pressing treatment, the supporting layer is further subjected to a heating treatment, and a heating temperature *T2* in the heating treatment satisfies *40°C≤T2≤50°C.*

9. The method for manufacturing the secondary battery according to any one of claims 1 to 8, wherein the roll-pressing treatment comprises performing multiple roll-pressings on the stacked structure, with a roll-pressing pressure of each previous roll-pressing being less than or equal to that of each subsequent roll-pressing.

10. The method for manufacturing the secondary battery according to claim 9, wherein the roll-pressing treatment comprises a first roll-pressing and a second roll-pressing that are performed sequentially, the first roll-pressing and the second roll-pressing satisfy 30 MPa≤*P1*≤50 MP and 60 MPa≤*P2*≤90 MPa, where *P1* denotes a roll-pressing pressure of the first roll-pressing, and *P2* denotes a roll-pressing pressure of the second roll-pressing.

11. The method for manufacturing the secondary battery according to any one of claims 1 to 10, wherein a tensile strength of the supporting layer is defined as a first tensile strength *σb1,* with 10 MPa ≤ *σb1* ≤ 120 MPa.

12. The method for manufacturing the secondary battery according to any one of claims 1 to 11, wherein a tensile strength of the stacked structure is defined as a second tensile strength *σb2,* with 40 MPa ≤ *σb2* ≤ 250 MPa.

13. A secondary battery, wherein the secondary battery is obtained by the method according to any one of claims 1 to 12; and
the secondary battery comprises:
a housing provided with an accommodation chamber therein; and
a cell assembly installed in the accommodation chamber and comprises a cathode plate, a separator, and an anode plate, and the anode plate comprises an anode current collector and an anode active material layer;
wherein a thickness of the anode current collector is defined as a foil thickness h, with 0 µm < *h* ≤ 5 µm.

14. An energy storage system, comprising a plurality of secondary batteries obtained by the method according to any one of claims 1 to 12 or being the secondary battery according to claim 13.

15. An electric equipment, comprising a plurality of secondary batteries obtained by the method according to any one of claims 1 to 12 or being the secondary battery according to claim 13.
